# EUROPÄISCHE PATENTSCHRIFT

(11) **EP 4 427 856 B1**
(45) Veröffentlichungstag und Bekanntmachung des Hinweises auf die Patenterteilung: **30.04.2025**
(21) Anmeldenummer: 23160169.1
(22) Anmeldetag: 06.03.2023
(51) Int. Cl.: B09B 3/80, C01B 32/05, C22B 7/00, C22B 26/12, H01M 10/54, B09B 3/70, B09B 101/16, C22B 3/00, C22B 47/00, C22B 3/08

(54) **VERFAHREN UND ANLAGE ZUR RÜCKGEWINNUNG VON GRAPHIT AUS SCHWARZER MASSE**
PROCESS AND PLANT FOR RECOVERING GRAPHITE FROM A BLACK MASS
PROCÉDÉ ET INSTALLATION POUR LA RÉCUPÉRATION DE GRAPHITE À PARTIR DE MATIÈRE NOIRE

(43) Veröffentlichungstag der Anmeldung: 11.09.2024
(73) Patentinhaber: Aurubis AG, 20539 Hamburg (DE)
(72) Erfinder: Harris, Andrew, 20259 Hamburg (DE); Rahbani, Rakan, 22459 Hamburg (DE); Bryson, Leslie James, 22609 Hamburg (DE)
(74) Vertreter: Müller Verweyen

(56) Entgegenhaltungen:
- EP-A1- 3 535 803
- US-A1- 2022 320 619
- US-A1- 2023 038 978

## Beschreibung

Die Erfindung betrifft ein Verfahren zur Rückgewinnung von Graphit aus schwarzer Masse.

Die weltweite Batterieproduktion weist sehr hohe Wachstumsraten auf. Der Bedarf der für die Produktion benötigten Ressourcen, nämlich Rohstoffe wie Lithium, Graphit und Metalle wie Nickel, Kobalt und Mangan, wird dementsprechend ansteigen. Die benötigten Rohstoffe werden hauptsächlich aus primären Quellen gewonnen, dennoch wird der Anteil der sekundären Quellen aus dem Recycling in Zukunft steigen. Solche sekundären Quellen werden zu einer so genannten schwarzen Masse aufbereitet, die ein Gemisch aus Lithium-Ionen-Batterieschrott und/oder Schrott aus Batterieproduktionsprozessen ist, das zu einem feinen Pulver verarbeitet wird. So enthält die schwarze Masse in der Regel eine Mischung aus aktiven Anoden- und/oder Kathodenmaterialien von Batterien. Außerdem kann die schwarze Masse Kunststoffe und/oder Stromleiter wie Kupfer und/oder Aluminium enthalten. Weiterhin können organische Binder und Elektrolyte ebenfalls vorliegen. Die typisch schwarze Farbe der schwarzen Masse kann auf Kohlenstoff, insbesondere Graphit oder Carbon Black, zurückgeführt werden, der häufig in aktiven Anodenmaterialien von Ionen-Batterien verwendet wird.

Der Graphitanteil in der schwarzen Masse beträgt häufig nur etwa 15 bis 20 Gewichtsprozent, bei vorteilhaftem Ausgangsmaterial kann der Anteil bei 20 bis 40 Gewichtsprozent liegen, so dass ein Recycling des Graphits häufig nicht in Betracht gezogen wird. Stattdessen wird das Graphit der schwarzen Masse in der Regel verbrannt. Der steigende Bedarf an Graphit sowie die unerwünschten COx Emissionen bei der Verbrennung begünstigen zunehmend ein Recycling von Graphit aus schwarzer Masse. Die Anforderungen an die Reinheit von Graphit für die Verwendung in Batteriezellen sind jedoch sehr hoch, was auch die Anforderung an Recyclingprozesse sehr hoch setzt. Problematisch ist hierbei, dass übliche Verarbeitungsprozesse bei der Gewinnung und Aufreinigung von Graphit aus natürlichen Quellen, wie beispielsweise Flotation, bei schwarzer Masse nur sehr geringe Effizienzen zeigen und daher eine Anwendung verhindern.

Aus der US 2023/0038978 A1 ist ein Verfahren für das Recycling von Lithiumeisenphosphatbatterien bekannt, wobei ein Oxidationsmittel einem Recyclingstrom zugegeben wird, um eine Laugenlösung zu erzeugen. Durch Filterung der Laugenlösung wird ein Rest von einer lithiumhaltigen Lösung abgetrennt. Das Lithium wird anschließend ausgefällt.

Weiterhin ist aus der US 2022/0320619 A1 ein Verfahren zum Recycling von Lithiumbatterien bekannt, wobei konzentrierte Schwefelsäure bei einer Temperatur von wenigstens 100°C eingesetzt wird, und wobei wenigstens eine metallische Komponente durch nasschemische Extraktion gewonnen wird.

Die EP 3 535 803 A1 offenbart einen Prozess zur Rückgewinnung von Materialien aus Li-Ionen-Batterien. Der Prozess umfasst die Verarbeitung der Batterien zu einem zerkleinerten Beschickungsstrom und ermöglicht dann über eine Reihe von Trenn-, Isolierungs- und/oder Auslaugungsschritten die Rückgewinnung eines Kupfer-, Kobalt-, Nickel-, Mangan- und/oder Graphitprodukts sowie eines Lithiumprodukts.

Es ist daher die Aufgabe der Erfindung, ein kosteneffizientes Verfahren zur Rückgewinnung von Graphit aus schwarzer Masse bereitzustellen, das eine effiziente Rückgewinnung mit hoher Reinheit ermöglicht.

Die Erfindung löst dieses Problem mit den Merkmalen der unabhängigen Ansprüche.

Es wird ein Verfahren zur Rückgewinnung von Graphit aus schwarzer Masse vorgeschlagen, dass die folgenden Schritte in der folgenden Reihenfolge aufweist:
- Schritt (a): Bereitstellung einer schwarzen Masse, die Graphit enthält;
- Schritt (b): Zugeben von Wasser zu der schwarzen Masse und Herstellung einer Suspension der schwarzen Masse in Wasser;
- Schritt (c): Dosieren von Ozon als Oxidationsmittel zu der Suspension und gleichzeitig Rühren der Suspension von schwarzer Masse mit Wasser, vorzugsweise mit einer Scherrate von größer 11000s⁻¹;
- Schritt (f): Flotation der Suspension und Abschöpfen von Graphit.

Es hat sich überraschender Weise gezeigt, dass die vorgeschlagenen Verfahrensschritte eine Vorbehandlung der schwarzen Masse erreichen, die eine Abtrennung von Graphit aus schwarzer Masse durch Flotation ermöglicht. Es können Reinheiten erreicht werden, die ähnlich der Abtrennung aus primären Graphitquellen sind.

Mit dem vorgeschlagenen Verfahren können Konzentrationen von mehr als 90% Graphit bei einer Ausbeute von mehr als 70% aus der schwarzen Masse erreicht werden. Es kann beispielsweise ein Kohlenstoffgehalt von 91,5% bei einer Ausbeute von 73% erreicht werden. Auf diese Weise kann das Graphit der schwarzen Masse sehr selektiv zurückgewonnen werden, wodurch das Graphit einer weiteren wirtschaftlichen Verwendung zugeführt und eine Verbrennung vermieden werden kann. Weiterhin kann die Rückgewinnung von weiteren Bestandteilen aus der schwarzen Masse durch die selektive Entfernung von Kohlenstoff, insbesondere Graphit, verbessert werden. Das vorgeschlagene Verfahren ermöglicht somit eine sehr wirtschaftliche Rückgewinnung von Graphit aus schwarzer Masse.

Schwarze Masse im Sinne der vorliegenden Erfindung ist Material aus ausrangierten Batterien, z.B. Lithium-Ionen-Batterien, und/oder ausrangierte Teile davon, und/oder ausrangierte Materialien aus Produktionsprozessen von Batterien, wie beispielsweise Anodenmaterialien. Die schwarze Masse weist einen Anteil von Graphit auf, der in der Regel in der Anode einer Batterie Anwendung gefunden hat. Die oben genannten Ausgangsmaterialien werden mechanisch zu einem pulverigen Material verarbeitet, das dann als schwarze Masse bezeichnet wird und ein großes Verhältnis von Oberfläche zu Masse aufweist.

Schwarze Masse enthält daher im Sinne dieser Anmeldung zumindest Graphit und somit das Element Kohlenstoff (C) und in der Regel mehrere oder alle der folgenden Elemente: Lithium (Li), Kobalt (Co), Nickel (Ni), Mangan (Mn), Eisen (Fe), Kupfer (Cu), Aluminium (Al), Phosphor (P), Fluor (F).

Je nach Ausgangsmaterial der schwarzen Masse können die Anteile von Graphit oder weiteren Metallen, die in einem Recyclingprozess zurückgewonnen werden sollen, sehr unterschiedlich sein. Unterschiedliche Batteriechemien, die z.B. als NMC, NCA, LFP bekannt sind, können zu unterschiedlichen Anteilen oder zum Fehlen wertvoller Metalle, z.B. Co, Ni oder Mn, führen. So sind unterschiedliche Bestandteile mit anderen Elementen in verschiedenen Zusammensetzungen möglich. Die schwarze Masse im Sinne der Erfindung enthält jedoch immer das Element C in Form von Graphit, wenn schwarze Masse in Schritt (a) bereitgestellt wird. Häufig weist die schwarze Masse auch Li auf, was beispielsweise chemisch im aktiven Kathodenmaterial gebunden und/oder metallisches Li sein kann, insbesondere in/um das aktive Anodenmaterial, welches einen hohen Graphitanteil aufweist.

In Bezug auf Schritt (b) wird weiter vorgeschlagen, dass die schwarze Masse in Wasser mit einer Masse im Bereich von 10 g bis 300 g, vorzugsweise im Bereich von 10 g bis 250 g, weiter bevorzugt im Bereich von 100 g bis 200 g, pro 1 l Wasser in Suspension gebracht wird. Zum Beispiel werden 200 g schwarze Masse in 1 l Wasser suspendiert.

In Schritt (c) des vorgeschlagenen Verfahrens wird Ozon als Oxidationsmittel in die Suspension dosiert, während die Suspension gerührt wird. Vorzugsweise wird Ozon in dem Wasser der Suspension gelöst. Somit wird die schwarze Masse oder zumindest Teile der schwarzen Masse mit Ozon oxidiert. Ozon (O₃) ist als starkes Oxidationsmittel bekannt. Die Verwendung von Ozon als Oxidationsmittel ist jedoch mit einigen Nachteilen verbunden, da Ozon gegenüber Disauerstoff instabil ist und sich schnell zersetzt. Die Halbwertszeit von Ozon verringert sich weiter, wenn es in Wasser gelöst wird, und sie verringert sich mit steigender Temperatur noch weiter, was zu einer sehr geringen Effizienz des Verfahrens führt und sogar dazu führen kann, dass das Ozon nicht in der beabsichtigten Weise reagiert, wenn es bei hohen Temperaturen in Wasser gelöst wird. Die Löslichkeit von Ozon in Wasser ist sehr gering.

Es hat sich gezeigt, dass durch Rühren der Suspension von schwarzer Masse in Wasser der Stoffaustausch so weit erhöht werden kann, dass das Ozon mit den Partikeln der schwarzen Masse, insbesondere mit der Oberfläche der Partikel der schwarzen Masse, in der Suspension reagieren kann, bevor sich das Ozon zersetzt. Der effektive Einsatz von Ozon beginnt bei hohen Rührgeschwindigkeiten und wird bei weiter erhöhten Rührgeschwindigkeiten noch effektiver, so dass sehr hohe Oxidationspotentiale (>850 mV) erzeugt werden können.

Daher wird vorgeschlagen, dass die Suspension intensiv gerührt oder mit hohen Rührgeschwindigkeiten gerührt wird, während Ozon als Oxidationsmittel in die Suspension dosiert wird. Vorzugsweise wird in Schritt (c) ein Oxidations-/Reduktionspotenzial (ORP) von >850 mV erzeugt, indem der Suspension Ozon zudosiert wird, während die Suspension gerührt wird. Das ORP kann durch sehr intensives Rühren während des Schritts (c) weiter auf >1200 mV erhöht werden. Ozon als starkes Oxidationsmittel mit einem Redoxpotential von > 850 mV oxidiert beispielsweise Co und Mn und ist für die Rückgewinnung nicht darauf angewiesen, dass diese bereits im Co(III)- und Mn(IV)-Zstand vorliegen, so dass schwarze Massen mit unterschiedlicher Mineralogie und Vorbehandlung erfolgreich verarbeitet werden können.

Es wird ferner vorgeschlagen, dass durch Rühren der Suspension während Schritt (c) eine turbulente Strömung in der Suspension erzeugt wird.

Vorzugsweise liegt das intensive Rühren oder das Rühren mit hohen Rührgeschwindigkeiten über einem Schwellenwert, über dem der Anteil des Ozons, der mit der schwarzen Masse reagieren kann, größer ist als der Anteil des Ozons, der sich vorzeitig zu Beginn von Schritt (c) zersetzt.

Gemäß einer Weiterentwicklung wird vorgeschlagen, dass in Schritt (c) die Suspension mit einer Scherrate von größer als 11000s⁻¹, vorzugsweise größer als 25000s⁻¹, weiter vorzugsweise größer als 27000s⁻¹, weiter bevorzugt größer als 29000s⁻¹, beispielsweise 30000s⁻¹, in der Suspension gerührt wird.

Eine hohe Scherrate, insbesondere über 11000s⁻¹, beispielsweise 12000s⁻¹, vorzugsweise über 29000s⁻¹, erhöht den Stoffaustausch in ausreichendem Maße, so dass Ozon mit der schwarzen Masse reagieren kann, bevor es sich zersetzt. Bei einer Scherrate von über 11000s⁻¹, beispielsweise 12000s⁻¹, kann ein ausreichend hohes ORP erreicht werden, um die Suspension aus Wasser und schwarzer Masse mit Ozon auszulaugen, wobei noch höhere Scherraten zu einem noch höheren ORP führen können. Bei einer Scherrate von größer als 25000s⁻¹ kann beispielsweise ein ORP von >850 mV erreicht werden, während noch höhere Scherraten zu einem noch höheren ORP, z.B. >1200 mV, führen können.

Beispielsweise kann eine Scherrate in einem Fluid zwischen zwei parallelen Platten durch die relative Geschwindigkeit der beiden Platten geteilt durch den Abstand der Platten bestimmt werden.

Diese Vorbehandlung ermöglicht es, dass Graphit mittels Flotation, vorzugsweise mittels Froth Flotation, aus der schwarzen Masse separiert werden kann. Dies basiert auf der unterschiedlichen Hydrophobie der Stoffe in der schwarzen Masse mit unterschiedlichen Neigungen sich an Luftblasen zu hängen und eine Froth-Schicht zu bilden. Das hydrophobe Graphit kann aus der schwarzen Masse abgetrennt werden, während die übrigen hydrophilen Stoffe im Rückstand verbleiben. Dies ist aus schwarzer Masse mit hohen Effizienzen jedoch erst durch die vorgeschlagene Vorbehandlung möglich, welche die Graphitpartikel in der schwarzen Masse befreit, was sich beispielsweise auch in einer Mineral Liberation Analysis (MLA) zeigt. In der schwarzen Masse liegt das Graphit aufgrund der Verarbeitung zu einem Anodenmaterial, dem Einsatz in einer Batterie und der Aufbereitung zu einer schwarzen Masse zu einem Großteil in Verbundpartikeln vor, die einer Flotation im Gegensatz zu Graphit aus natürlichen Quellen nicht zugänglich sind.

Die vorgeschlagenen Prozessschritte werden grundsätzlich im Rahmen dieser Anmeldung in alphabetischer Reihenfolge durchgeführt, sofern die Reihenfolge nicht anders beschrieben ist, wobei auch einzelne Verfahrensschritte gemäß der alphabetischen Reihenfolge ausgelassen werden können oder vorteilhafte Weiterentwicklungen darstellen.

Die bereitgestellte schwarze Masse enthält in Schritt (a) in möglichen Ausführungsformen Lithium. Sofern Li in der schwarzen Masse vorhanden ist, ermöglicht Schritt (c), dass Lithium in Lösung gebracht werden kann, während die weiteren Bestandteile der schwarzen Masse als Feststoff verbleiben oder wieder ausgefällt werden. Dementsprechend kann die Suspension aus Wasser und schwarzer Masse mit Ozon ausgelaugt werden, insbesondere in einer neutralen Laugung, wobei eine sehr hohe Selektivität für Li erreicht werden kann.

Vorzugsweise wird in einem Schritt (d) die Suspension aus Schritt (c) gefiltert und das Filtrat abgetrennt wird, wobei das Filtrat in Wasser gelöstes LiOH enthält, und der an Li verarmte Rückstand schwarze Masse mit Graphit enthält.

Durch die Filterung in Schritt (d) kann eine vollständige hydrometallurgische Entfernung von Li somit zu Beginn des Rückgewinnungsverfahrens durchgeführt werden, wobei die Entfernung von Li parallel zur Vorbehandlung der schwarzen Masse durchgeführt werden kann.

Das vorgeschlagene Verfahren hat eine sehr hohe Selektivität für Li mit sehr geringen Anteilen anderer Bestandteile als in Wasser gelöstes LiOH. Die Laugung ist äußerst selektiv gegenüber Ni, Co und Mn bis unterhalb der Nachweisbarkeit, die typischerweise in verbrauchtem Lithium-Ionen-Batteriematerial und damit in der schwarzen Masse vorhanden sind. Die hohe Selektivität für Li kann auch für eine breite Auswahl von Mineralogien der schwarzen Massen und Vorbehandlungen erreicht werden. Darüber hinaus ermöglicht das vorgeschlagene Verfahren auch hohe Extraktionsraten von Li >90%. Daher ist das Verfahren sehr effizient und wird vorzugsweise als Batch-Verfahren durchgeführt, wobei eine Rezirkulation aufgrund der hohen Selektivität möglich und sehr vorteilhaft ist, wie weiter unten beschrieben. Insbesondere kann eine Verunreinigung des zurückgewonnenen Lithiums mit Alkalielementen, insbesondere Na und/oder K, vermieden werden.

Dem an Li verarmten Rückstand der schwarzen Masse in Form von Feststoffen und/oder Schlämmen wird das Li bereits zu einem frühen Zeitpunkt im Verfahren der Rückgewinnung entzogen. Durch die Extraktion am Anfang des Verfahrens kann der Rückstand, der neben Graphit wertvolle Elemente wie z.B. Ni, Co, Mn enthält, unabhängig mit anderen Verarbeitungsoptionen verarbeitet werden. Darüber hinaus werden Lithiumverluste an andere Produkte und Zwischenprodukte durch eine niedrige Wascheffizienz oder Co-Ausfällung reduziert.

In einer bevorzugten Ausführungsform wird in einem Schritt (e) mit dem Rückstand aus Schritt (d) unter Zugabe von Wasser und/oder rezykliertem Filtrat aus Schritt (d), deren Li Anteil reduziert wurde, wieder eine Suspension von schwarzer Masse in Wasser, die Graphit enthält, hergestellt.

Hieran schließt sich vorzugsweise der Schritt (f) mit der Flotation an, wobei in möglichen Ausführungsformen dazwischen der Schritt (h) mit einer sauren Laugung durchgeführt werden können, der im Weiteren noch beschrieben wird.

Die Suspension wird entsprechend Schritt (f) in einer Flotationszelle, beispielsweise einer konventionellen mechanischen Flotationszelle, flotiert. Die Flotation erfolgt vorzugsweise nach Froth. Das Graphit wird im Flotationskonzentrat von dem Flotationsrückstand abgetrennt und kann entsprechend abgeschöpft werden.

Gemäß einer Weiterentwicklung wird vorgeschlagen, dass die Suspension
- nach Schritt (b) und vor Schritt (c), und/oder
- nach Schritt (c) und vor Schritt (f) in einem sauren Laugungsschritt (h) gelaugt wird, wobei mindestens eine Säure, vorzugsweise Schwefelsäure (H₂SO₄), und/oder rezirkulierte Säure zugegeben wird und der pH-Wert unter pH 3 gesenkt wird.

Die Suspension weist vor Schritt (c) und nach Schritt (c) und vor Schritt (f) Graphit auf, das mit der schwarzen Masse in Wasser in Suspension vorliegt. Nach Schritt (f) ist das Graphit und/oder Kohlenstoff bis auf mögliche Reste aus der Suspension entfernt.

Es ist insbesondere vorteilhaft den sauren Laugungsschritt (h) nach dem Schritt (d) oder (e) durchzuführen. Es ist weiterhin besonders vorteilhaft, wenn dem Rückstand aus der Filterung des Schritt (d), also nach der Durchführung des Schritts (c) und vor der Flotation gemäß Schritt (f) mindestens eine Säure im sauren Laugungsschritt (h) zugegeben. Vorzugsweise liegen 200 bis 400 g Feststoff pro l im sauren Laugungsschritt (h) vor.

In einer möglichen Ausführungsform kann der saure Laugungsschritt (h) vor dem Schritt (c) ausgeführt werden, was beispielsweise für schwarze Masse ohne Lithium, beispielsweise aus dem Recycling von Na-Ionen-Batterien, vorteilhaft sein kann, da mögliche Prozessschritte zum Abtrennen von Lithium vor der sauren Laugung in einer solchen Situation keinen Vorteil bieten.

Der saure Laugungsschritt (h) wird vorzugsweise bei einem pH-Wert von 2 oder weniger gestartet. Weiterhin wird der saure Laugungsschritt (h) in vorteilhaften Ausführungsformen bei einem pH-Wert im Bereich von 3 bis 5 beendet.

Durch die saure Laugung in Schritt (h) können beispielsweise Metall wie Ni, Co und Mn in Lösung gebracht werden, wohingegen Cu und/oder Al als Feststoff vorliegen.

Gemäß einer Weiterentwicklung wird vorgeschlagen, dass ein Reduktionsmittel, vorzugsweise Schwefeldioxid (SO₂), zu dem sauren Laugungsschritt (h) zugegeben wird. Dies verbessert die Wirkung der sauren Laugung in Schritt (h).

Es wird ferner vorgeschlagen, dass eine Calcium-Quelle, vorzugsweise Calciumhydroxid (Ca(OH)₂) und/oder Calciumoxid (CaO) und/oder Calciumcarbonat (CaCO₃), zu der Suspension aus Schritt (h) zugegeben wird. Hierdurch kann beispielsweise F ausgefällt werden.

Vorzugsweise wird in einem Schritt (i) Suspension aus dem sauren Laugungsschritt (h) filtriert.

Hierdurch kann im Rückstand Graphit sowie beispielsweise Cu, Al und F abgetrennt werden, während beispielsweise Ni, Co und/oder Mn aus dem sauren Laugungsschritt (h) in Lösung verbleiben.

Der Rückstand mit dem Graphit kann anschließend mit Wasser wieder in eine Suspension, beispielsweise mit 5 bis 10% Feststoffanteil, gebracht und dem Flotationsschritt (f) zugeführt werden.

Gemäß einer vorteilhaften Ausführungsform wird vorgeschlagen, dass Schritt (c) für mindestens 3h, vorzugsweise mindestens 3,5h, beispielsweise 4h, durchgeführt wird.

Die Konzentration des im Wasser der Suspension gelösten Li steigt mit der Zeit bis zur maximalen Extraktionsrate, die z.B. innerhalb von 4 Stunden erreicht werden kann. Darüber hinaus ist die Oxidation von Co und Mn auch von der Reaktionsdauer abhängig, wobei eine längere Reaktionsdauer eine vollständige Rückgewinnung aus der Lösung ermöglicht, z.B. nach 3 Stunden für Mn und nach 4 Stunden für Co. Die Co- und Mo-Oxide werden also ausgefällt, nachdem sie in der Lösung gelöst wurden. Daher ermöglicht die Durchführung von Schritt (c) für die oben genannte Dauer eine sehr hohe Selektivität des Extraktionsverfahrens. Die entsprechende Zeitdauer führt zu einer guten Vorbehandlung der schwarzen Masse, so dass eine gute Abtrennung von Graphit durch Flotation erreicht werden kann.

In einer bevorzugten Ausführungsform wird in Schritt (c) Ozon mit einer Rate von mindestens 0,1 Gramm (O₃)/Stunde/Gramm (schwarze Masse), zum Beispiel 1 Gramm(O₃)/Stunde /Gramm(schwarze Masse), und/oder mit einer maximalen Rate von 2 Gramm (O₃)/Stunde/Gramm (schwarze Masse) in die Suspension dosiert.

Dementsprechend ist der Massenstrom an Ozon pro Stunde auch abhängig von der Masse der bereitgestellten schwarzen Masse in der Suspension. Um Ozon mit einer gleichen Rate von z.B. 1,5 Gramm(O₃)/Stunde/Gramm(schwarze Masse) bereitzustellen, muss der Massenstrom an Ozon z.B. verdoppelt werden, wenn die bereitgestellte schwarze Masse verdoppelt wird.

Es gibt eine untere Grenze für die Dosierung von Ozon in die Suspension, um eine ausreichende Wirkung der Vorbehandlung der schwarzen Masse zu erzielen, während eine obere Grenze vor allem wirtschaftliche Gründe hat, da das vorgeschlagene Rühren die Wirksamkeit des zugeführten Ozons in ausreichender Weise erhöht.

Gemäß einer Weiterentwicklung wird vorgeschlagen, dass in Schritt (c) die Temperatur der Suspension über 69°C, vorzugsweise über 80°C, ist.

Eine Temperatur von 70°C oder mehr ermöglicht hohe Li-Extraktionsraten von mehr als 90%, die bei 90°C auf mehr als 95% gesteigert werden können. Daher wird die Suspension vorzugsweise erhitzt. Weiterhin kann dadurch eine gute Vorbehandlung des Graphits für die Flotation erreicht werden.

In einer Weiterentwicklung wird vorgeschlagen, dass eine Säure, vorzugsweise Schwefelsäure (H₂SO₄), zu der Suspension in Schritt (b) und/oder Schritt (c) zugegeben wird und der pH-Wert der Suspension auf einen pH-Wert im Bereich von 3 und bis 4,5, vorzugsweise 3 bis 4 abgesenkt wird. Der Schritt (c) wird vorzugsweise bei einem pH-Wert von 9 beendet.

Ein pH-Wert unter 4,5 erhöht die Extraktionsrate von Li sogar noch weiter im Vergleich zu einer Ausführungsform des Verfahrens ohne das Absenken des pH-Werts, was zu Li-Extraktionsraten über 90 % führt, wobei eine Extraktionsrate für Li sogar über 95 % möglich ist. Gleichzeitig wird eine verbesserte Vorbehandlung zur Befreiung des Graphits in der schwarzen Masse erreicht. Ein pH-Wert unter 3 führt zu einem übermäßigen Verlust an Li-Selektivität.

Während Co und Mn mit der oben vorgeschlagenen Reaktionsdauer, z.B. 4 Stunden, vollständig zurückgewonnen werden können, hat das Absenken des pH-Werts in den Bereich von 3,5 bis 4,5 den Nebeneffekt, dass die Ni-Extraktion bei längerer Dauer zusammen mit der Li-Extraktion zunimmt. Somit wird die Extraktionsrate für Li auf einen sehr hohen Wert erhöht, aber auch Ni wird gelöst.

Bei der Säure handelt es sich vorzugsweise um Schwefelsäure (H₂SO₄), die eine weitere vorteilhafte Wirkung auf das Verfahren zur Rückgewinnung von Metallen haben kann, z.B. für die Kristallisation von Ni-Sulfat. Je nach den gewünschten Endprodukten des Verfahrens zur Rückgewinnung von Metallen können jedoch auch andere Säuren geeignet sein.

In einer alternativen Ausführungsform wird vorgeschlagen, dass in Schritt (c) die Suspension der schwarzen Masse in Wasser einen pH-Wert im Bereich von 6 bis 8, vorzugsweise im Bereich von 7 bis 8, z.B. einen pH-Wert von 8, aufweist.

Die Extraktion von Li in Schritt (c) kann in einer vorteilhaften Ausführungsform in einer neutralen Laugung ohne jegliche pH-Einstellung durchgeführt werden, wobei die Wirkung des Ozons außer Acht gelassen wird, was das Verfahren vereinfacht und somit kostengünstig ist. Wird Ozon als Oxidationsmittel in die Suspension dosiert und die Suspension dabei gerührt, vorzugsweise mit einer Scherrate >11000s⁻¹, hat die Suspension vorzugsweise einen pH-Wert im Bereich von 6 bis 8, insbesondere im Bereich von 7 bis 8, was Extraktionsraten von etwa über 70 % für Li ermöglicht. Darüber hinaus hat der vorgeschlagene pH-Bereich, insbesondere ein pH-Wert von 7 bis 8, den vorteilhaften Effekt, dass Co, Mn und insbesondere Ni aus der Lösung ausgefällt bzw. nicht in Lösung gebracht wird, was zu einer sehr hohen Selektivität der Li-Extraktion als LiOH in Wasser aus schwarzer Masse führt, während immer noch gute Extraktionsraten für Li erzielt und gleichzeitig eine gute Befreiung des Graphits in der schwarzen Masse erreicht wird.

Dementsprechend kann das Li enthaltende Filtrat aus Schritt (d) auch einen pH-Wert im Bereich von 6 bis 8, insbesondere 7 bis 8, aufweisen, was eine kostengünstige Weiterverarbeitung des Filtrats ermöglicht.

Es wird ferner vorgeschlagen, dass nach Schritt (c) eine Base, vorzugsweise Natriumhydroxid (NaOH) und/oder Calciumhydroxid (Ca(OH)₂) und/oder Calciumoxid (CaO), zugegeben und der pH-Wert der Suspension vor Schritt (d) oder der pH-Wert des Filtrats von Schritt (d) auf einen pH-Wert über 6, beispielsweise 9, vorzugsweise auf einen pH-Wert über 9, weiter vorzugsweise auf einen pH-Wert über 10 angehoben wird.

Insbesondere ein pH-Wert von mehr als 9, beispielsweise 10, vorzugsweise ein pH-Wert von mehr als 10, ermöglicht die vollständige Ausfällung des Ni(II) als Hydroxid aus der Lihaltigen Lauge. Dies ist besonders vorteilhaft, wenn der pH-Wert der Suspension mit einer Säure auf unter oder gleich 6 oder insbesondere auf unter oder gleich 4,5 gesenkt wurde, um die Li-Extraktionsrate zu maximieren. Auf diese Weise kann der Nebeneffekt des gelösten Ni umgekehrt werden, was zu einer sehr hohen Extraktionsrate von in Wasser gelöstem Li von über 90 %, z.B. 95 %, führt, während gleichzeitig eine sehr hohe Selektivität oder Reinheit des gelösten Li erreicht wird.

Die Anhebung des pH-Wertes der Suspension oder des Filtrats mit einer Base wird vorzugsweise bei einer Temperatur von 25°C bis 70°C durchgeführt.

Vorzugsweise wird der pH-Wert vor der Filtration der Suspension auf pH > 9, z.B. pH = 10, weiter bevorzugt auf pH > 10 eingestellt.

Dementsprechend enthält das Filtrat Li, das als LiOH in Wasser gelöst ist, mit einer sehr hohen Reinheit. Das Graphit sowie andere Elemente, die in der schwarzen Masse vorhanden sein können, wie beispielsweise Ni, Co, Mn, Cu, Al, Fe, verbleiben im Rückstand.

Darüber hinaus entfernt die pH-Einstellung mit Ca-haltigen Basen, insbesondere Calciumhydroxid und/oder Calciumoxid, F und/oder P aus der Lösung, so dass ein geringerer Gehalt an F und P im Filtrat erreicht wird.

Die pH-Einstellung mit Na-haltigen Basen, insbesondere Natriumhydroxid, belässt F und P in der Lösung, was das Abtrennen von F aus dem Rückstand und die weitere Verarbeitung des Rückstands ermöglicht, was vorteilhafterweise die Anreicherung von HF in anderen nachgeschalteten Prozessen, z.B. in schwarze Säure, verhindern kann. Die zur Einstellung des pH-Wertes auf die oben beschriebenen Werte erforderliche Na-Menge liegt deutlich unter der Löslichkeitsgrenze und führt nicht zu einer Na-Kontamination des Li-Produkts.

Infolgedessen können durch das vorgeschlagene Verfahren erzeugte Filtrat, das in Wasser gelöstes LiOH mit hoher Reinheit enthält, und der an Li abgereicherte Rückstand bzw. der Rückstand mit stark reduziertem Li-Gehalt unabhängig voneinander zu der gewünschten Form des Endprodukts der aus der schwarzen Masse zurückgewonnenen Metalle verarbeitet werden. Dabei ist es möglich, die hohe Selektivität und Extraktionsrate für Li des vorgeschlagenen Verfahrens zu nutzen.

Die Flotation gemäß Schritt (f) wird in besonders vorteilhaften Ausführungsformen nach einer Filterung, beispielsweise gemäß Schritt (d) und/oder Schritt (i), an einer mit dem Rückstand dieser Filterung hergestellten Suspension durchgeführt, welche vorzugsweise 5 bis 10% Feststoff in Wasser aufweist.

Die Flotation gemäß Schritt (f) erfolgt vorzugsweise mit einer Zuführung Luft, welche weiter vorzugsweise mit einer Rate von 0,8 bis 5 l/min per l flotierte Suspension zugeführt wird.

In einer bevorzugten Ausführungsform ist in Schritt (f) bei der Flotation der pH Wert in einem Bereich von 9 bis 10.

Vorzugsweise werden bei der Flotation in Schritt (f) 800 bis 5400g Kerosin pro t schwarze Masse und/oder 100 bis 1000 g MIBC(4-Methyl-2-pentanol) pro t schwarze Masse als Additive zugesetzt.

In einer besonders vorteilhaften Ausführungsform wird das abgeschöpfte Flotationskonzentrat mit Graphit aus Schritt (f) in Wasser suspendiert wird, und eine Aufreinigungsflotation der Suspension und ein Abschöpfen von Graphit durchgeführt.

Mit der vorgeschlagenen wiederholten Flotation in der Aufreinigungsflotation nach der entsprechenden Vorbehandlung der schwarzen Masse, welche einen hohen Grad der Befreiung des Graphits in der pulverförmigen schwarzen Masse zeigt, kann eine Konzentration von mehr als 96% Graphit in der Konzentration der wiederholten Flotation bei einer Rückgewinnungsquote von mehr 90% erreicht werden. Insgesamt kann somit über das Gesamtverfahren zur Rückgewinnung von Graphit aus schwarzer Masse eine Rückgewinnungsquote von mehr als 65% und eine Reinheit von über 96% erreicht werden, was ein sehr gutes Ergebnis für die Rückgewinnung von Graphit aus schwarzer Masse ist. Daher kann das auf diese Weise zurückgewonnene Graphit als hochwertiges Produkt wieder eingesetzt werden.

Es wird weiterhin vorgeschlagen, dass der Flotationsrückstand aus der Flotation aus Schritt (f) einer Restflotation zugeführt wird. Hierdurch kann zusätzliches, befreites Graphit zurückzugewonnen werden und die Rückgewinnungsquote insgesamt noch weiter angehoben werden.

Weiterhin wird zu diesem Zweck vorgeschlagen, dass das Flotationskonzentrat mit Graphit aus der Restflotation und/oder der Flotationsrückstand aus der Aufreinigungsflotation in den Schritt (f) zurückgeführt wird.

Ferner wird eine Anlage zur Durchführung eines Verfahrens nach einem der Ansprüche 1 bis 19 vorgeschlagen.

Im Folgenden wird die Erfindung anhand von bevorzugten Ausführungsformen unter Bezugnahme auf die Zeichnungen erläutert. Darin zeigt
- Fig. 1: die Verteilung von Graphitpartikeln aus schwarzer Masse über den Partikelgrößen und deren Verfügbarkeit für Flotation im Stand der Technik;
- Fig. 2: die Verteilung von Graphitpartikeln aus schwarzer Masse über den Partikelgrößen und deren Verfügbarkeit für Flotation nach Schritt (c);
- Fig. 3: die Verteilung von Graphitpartikeln aus schwarzer Masse über den Partikelgrößen und deren Verfügbarkeit für Flotation nach Schritt (c) und (h); und
- Fig. 4: die Verteilung von Graphitpartikeln aus schwarzer Masse über den Partikelgrößen und deren Verfügbarkeit für Flotation nach einer Aufreinigungsflotation.

Die schwarze Masse wird in Schritt (a) als graphithaltiges Ausgangsmaterial bereitgestellt. Die schwarze Masse ist aus Li-Ionen-Batterieschrott hergestellt, der zu einem Pulver verarbeitet wurde. Die Mineralogie der schwarzen Masse kann in Abhängigkeit von den Ausgangsmaterialien bzw. Schrottmaterialien variieren.

Anhand einer beispielhaften Zusammensetzung von schwarzer Masse soll der Effekt des vorgeschlagenen Verfahrens zur Rückgewinnung von Graphit aus schwarzer Masse dargestellt werden. Tabelle 1 zeigt hierbei eine mögliche Zusammensetzung von schwarzer Masse, die Graphit enthält. Die schwarze Masse wurde zu einer pulverartigen Masse zerkleinert, so dass ein hohes Verhältnis von Oberfläche zu Masse vorliegt. Tabelle 1 zeigt die Gewichtsanteile von schwarzer Masse für die aufgeführten Elemente.

**Tabelle 1:**

| Element | C | Al | Ca | Co | Cu | Fe |
|---|---|---|---|---|---|---|
| Gew.% | 31,1 | 4,4 | 0,30 | 16,0 | 5,6 | 0,72 |

| Element | Li | Mn | Ni | P | F | |
|---|---|---|---|---|---|---|
| Gew.% | 4,4 | 6,9 | 9,6 | 0,70 | 2,7 | |

Der Kohlenstoffanteil ist mit 31,1% entsprechend hoch, so dass prinzipiell ein großer Anteil Graphit für die Rückgewinnung zur Verfügung stehen sollte.

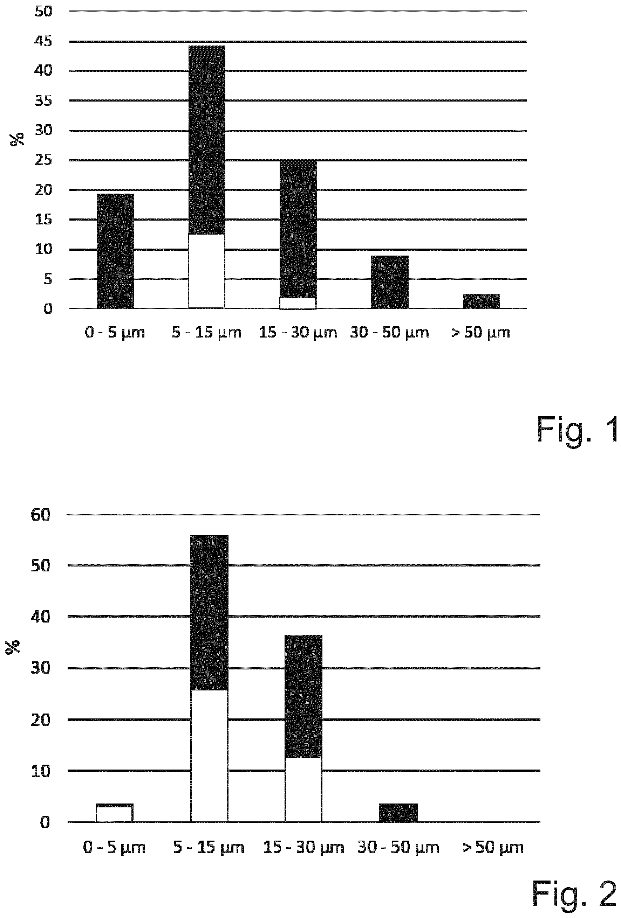

Zunächst soll eine direkte Flotation der vorliegenden schwarzen Masse nach dem Stand der Technik ohne die Anwendung des vorgeschlagenen Verfahrens dargestellt werden. Figur 1 zeigt die Verteilung von Graphitpartikeln aus schwarzer Masse über den Partikelgrößen und deren Verfügbarkeit für Flotation durch eine Mineral Liberation Analysis (MLA). Befreite Graphitpartikel sind durch weißen Balken und gebunden Graphitpartikel durch den schwarzen Balken symbolisiert. MLA wird verwendet, um quantitativ zu messen, inwieweit die einzelnen Mineralien, Bestandteile und Elemente eines feinen Feststoffs oder Pulvers, hier schwarze Masse, zu ganzen Partikeln zusammengesetzt sind. Wenn einzelne Mineralien, Bestandteile und Elemente überwiegend als einzelne Partikel auftreten, gelten sie als befreit oder aufgeschlossen und können durch physikalische Trennverfahren (z.B. Schwerkraft-/Magnet-/Flotationsverfahren) gewonnen werden. Ist dies nicht der Fall, liegen die Mineralien, Bestandteile und Elemente in Verbundpartikeln mit anderen vor und gelten als gebunden.

Wie in der Darstellung der Figur 1 erkennbar, ist nur in den Partikelgrößenklassen 5*µ*m bis 15 *µ*m und 15*µ*m bis 30 *µ*m ein messbarer Anteil des Kohlenstoffs befreit. Es sind daher insgesamt nur etwa 15% des Kohlenstoffs befreit, d.h. der Großteil von etwa 85% des Kohlenstoffs und somit des Graphits der schwarzen Masse ist in einem Verbundpartikel gebunden. Dementsprechend ist die Effizienz einer Rückgewinnung durch konventionelle Flotation nach dem Stand der Technik entsprechend niedrig, was in Tabelle 2 gezeigt ist.

**Tabelle 2:**

| Element | C | Cu | Al | Li-Ni-Co-Mn |
|---|---|---|---|---|
| Rückgewinnungsgrad im Konzentrat der Flotation / % | 64,7 | 21,4 | 27,8 | 22,7 |
| Konzentrat der Flotation / Gew.% | 45,6 | 6,9 | 5,6 | 23,4 |

In einem konventionellen Flotationsprozess wird daher ein signifikanter Anteil der aktiven Kathodenmaterialien und des Lithiums in das flotierte Graphit verschleppt, so dass keine effiziente Trennung und Rückgewinnung des Graphits aus schwarzer Masse mit einem konventionellen Verfahren erreicht werden können.

In einem vorteilhaften Ausführungsbeispiel wird die exemplarische schwarze Masse mit einem Graphitanteil gemäß der Tabelle 1 als Pulver gemäß Schritt (a) bereitgestellt und zunächst in eine Suspension mit Wasser mit einer Konzentration von 100 bis 200 g Feststoffe pro l Wasser gemäß Schritt (b) gebracht.

Die Suspension wird im folgenden Schritt (c) mit einer sehr hohen Scherrate, in diesem vorteilhaften Ausführungsbeispiel mit einer Scherrate von 34000s⁻¹ gemixt und gerührt. Gleichzeitig wird Ozon mit einer Rate von beispielsweise 0,05 bis 0,4 g Ozon pro g schwarze Masse pro Stunde für mehrere Stunden zugeführt. Die Temperatur der Suspension wird während des Rührens und der gleichzeitigen Zugabe von Ozon bei mehr als 80°C gehalten. Weiterhin wird der pH-Wert in einem Bereich zwischen 3 und 4 eingestellt und gehalten. Dieser Schritt wird für mehrere Stunden aufrecht gehalten.

In diesem vorteilhaften Ausführungsbeispiel wird zusätzlich am Ende dieses Schritts der pH-Wert deutlich angehoben, beispielsweise auf einen pH-Wert von 9, um selektiv Li aus der schwarzen Masse auszulaugen.

Die Suspension aus Schritt (c) wird anschließend in einem Schritt (d) gefiltert und der Rückstand enthält den an Li verarmten Rückstand schwarze Masse mit Graphit, während das Filtrat in Wasser gelöstes LiOH enthält.

Figur 2 zeigt eine weitere Mineral Liberation Analysis (MLA) des Rückstands schwarzer Masse mit Graphit nachdem der Schritt (c) durchgeführt wurde. Der Anteil des befreiten Graphits, siehe weiße Balken, konnte im Vergleich zum Ausgangsmaterial, siehe Figur 1 deutlich gesteigert werden, so dass insgesamt 42,8% des Graphits befreit und nur noch 57,2% des Graphits gebunden sind.

Der Rückstand mit der vorbehandelten schwarzen Masse mit Graphit wird anschließend wieder in eine Suspension mit 5 bis 10 Gew.-% Feststoff in Wasser gebracht, entsprechend Schritt (e).

Die Suspension wird nun entsprechend Schritt (f) in einer Flotationszelle, beispielsweise einer konventionellen mechanischen Flotationszelle, flotiert. Der pH-Wert wird hierbei vorteilhaft in einem Bereich zwischen 9 bis 10 eingestellt und gehalten. Es wird für die Flotation weiterhin 800 bis 5400 g Kerosin pro t Feststoff, hier schwarze Masse in der Suspension, und 100 bis 1000 g MIBC (4-Methyl-2-pentanol) pro t Feststoff in der Suspension zugegeben. Die Zuführung von Luft zur Flotation erfolgt beispielsweise mit einer Durchflussrate von 0,8 bis 5 l/min pro Liter Zellvolumen oder Suspension.

Tabelle 3 zeigt hierbei das resultierende Graphitkonzentrat nach der Flotation mit der vorgeschlagenen Vorbehandlung, wobei eine deutlich gesteigerte Selektivität für Graphit erreicht werden kann. Es kann ein Anteil von über 80 Gew.-% Graphit in dem Konzentrat der Flotation erreicht werden, wobei der Rückgewinnungsgrad von Graphit im abgeschöpften Konzentrat der Flotation bei über 65% liegt.

**Tabelle 3:**

| Element / Gew.% | C | Cu | Al | Li-Ni-Co-Mn |
|---|---|---|---|---|
| Rückgewinnungsgrad im Konzentrat der Flotation / % | 66,2 | 24,5 | 20,2 | 3,73 |
| Konzentrat der Flotation / Gew.% | 83,5 | 3,0 | 0, 9 | 6,1 |

In einem alternativen Ausführungsbeispiel wird nach dem Rühren und der parallelen Zuführung von Ozon entsprechend der zuvor ausgeführten Verfahrensweise und nachgelagerten Filtration entsprechend Schritt (d) der Rückstand der Filtration vor der Flotation zunächst einem sauren Laugungsschritt (h) zugeführt.

Der an Li-verarmte Rückstand der schwarzen Masse mit Graphit wird hierbei wieder in eine Suspension in Wasser mit gebracht, wobei die Suspension vorteilhaft mit 100 bis 200 g Feststoff/l eingestellt wird.

Die Suspension wird dann bei einem pH-Wert von 1 bis 2, der beispielsweise durch Zugabe von Schwefelsäure erreicht werden kann, gelaugt. Die Temperatur wird auf mehr als 60°C, beispielsweise 70°C, durch Heizen des Behälters eingestellt. Gleichzeitig wird unter Rühren Schwefeldioxid (SO₂) zugegeben. Dieser Prozess wird mehrere Stunden, beispielsweise 2, 3 oder 4, fortgesetzt, wobei der Prozess bei einem pH-Wert im Bereich 3 bis 5 beendet wird.

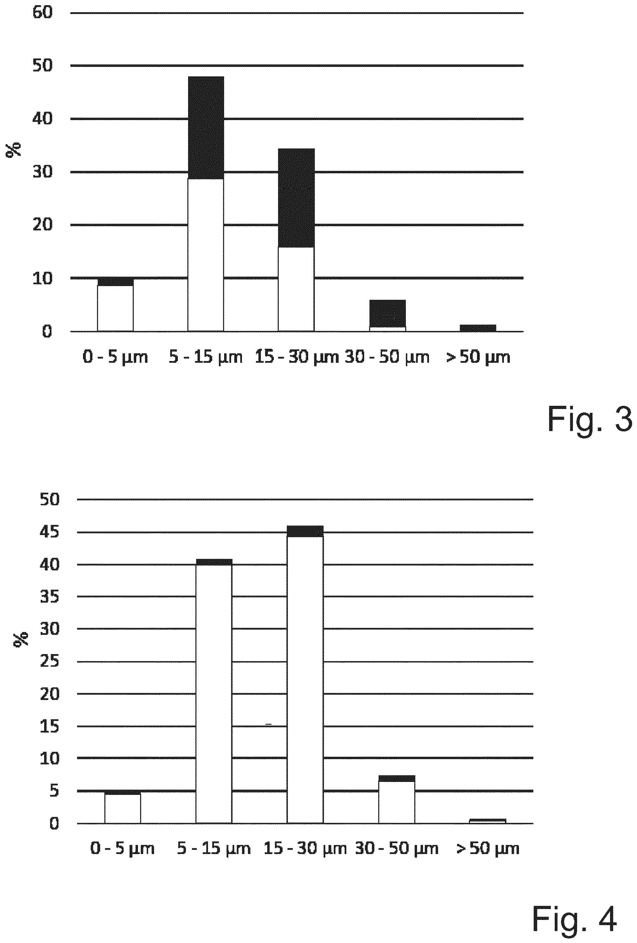

Figur 3 zeigt in einer MLA, dass durch das vorgeschlagene Verfahren über alle Partikelgrößenbereiche nochmal mehr Kohlenstoff befreit werden kann, so dass beispielsweise 54% des Kohlenstoffs einer physikalischen Trennung zugänglich gemacht werden kann.

Die Suspension wird anschließend gefiltert und der feste Rückstand wieder einer Suspension mit 5 bis 10 Gew.-% Feststoff in Wasser gebracht. Die Suspension wird nun auch in diesem Ausführungsbeispiel entsprechend Schritt (f) in einer Flotationszelle, beispielsweise einer konventionellen mechanischen Flotationszelle flotiert. Der pH-Wert wird hierbei vorteilhaft in einem Bereich zwischen 9 bis 10 eingestellt und gehalten. Es wird für die Flotation weiterhin 800 bis 5400 g Kerosin pro t Feststoff, hier schwarze Masse in der Suspension, und 100 bis 1000 g MIBC (4-Methyl-2-pentanol) pro t Feststoff in der Suspension zugegeben. Die Zuführung von Luft zur Flotation erfolgt beispielsweise mit einer Durchflussrate von 0,8 bis 5 l/min pro Liter Zell Volumen oder Suspension.

Tabelle 4 zeigt das resultierende Graphitkonzentrat nach der Flotation, welches vor der Flotation einem zusätzlichen sauren Laugungsschritt unterzogen wurde, wodurch eine nochmal gesteigerte Selektivität für Graphit erreicht werden kann. So kann eine Konzentration von über 90 Gew.-% für Graphit in dem Konzentrat der Flotation erreicht werden, wobei 73% des Graphits zurückgewonnen werden können.

**Tabelle 4:**

| Element / Gew.% | C | Cu | Al | Li-Ni-Co-Mn |
|---|---|---|---|---|
| Rückgewinnungsgrad im Konzentrat der Flotation / % | 73 | 10,2 | 9, 1 | 7,4 |
| Konzentrat der Flotation / Gew.% | 91,5 | 0,77 | 1 | 0,32 |

Die in den beiden zuvor ausgeführten Ausführungsbeispielen erhaltenen Konzentrationen von Graphit können durch Abschöpfen nach der Flotation in einem weiteren vorteilhaften Ausführungsbeispiel weiter erhöht werden. Hierzu wird an dem abgeschöpften Konzentrat aus der Flotation gemäß Schritt (f) wiederholt einer der zuvor beschriebenen Flotationsprozesse durchgeführt.

Es kann beispielsweise mit dem Konzentrat der Flotation, das im Prozessverlauf einem saurem Laugungsschritt unterzogen wurde, siehe Tabelle 4, ein weiterer Flotationsprozess als Aufreinigungsflotation mit beispielsweise den gleichen Parametern durchgeführt werden. Das Ergebnis dieser wiederholten Flotation ist in Tabelle 5 dargestellt.

**Tabelle 5:**

| Element / Gew.% | C | Cu | Al | Li-Ni-Co-Mn |
|---|---|---|---|---|
| Ausgangsmaterial | 91 | 68 | 64 | 62 |
| Konzentrat der Flotation | 96,4 | 0,2 | 0,8 | 0,26 |

Die Konzentration des zurückgewonnenen Graphits erreicht über 96% Gewichtsanteil, wodurch das Graphit eine ausreichende Reinheit für eine erneute Verwendung aufweist. Weiterhin zeigt Figur 4 eine MLA für das Konzentrat aus der wiederholten Flotation, wobei das befreite Graphit einen Anteil von 97,4% aufweist. Dies spiegelt die Bedeutung des befreiten Graphits durch die vorgeschlagenen Verfahrensschritte wider.

In einem weiteren möglichen Ausführungsbeispiel können die Flotationsrückstände aus dem Schritt (f) nach einem der beiden ausgeführten Ausführungsbeispiele, d.h. mit oder ohne sauren Laugungsschritt, und/oder aus einer wiederholten Flotation, welche auch als Aufreinigungsflotation bezeichnet werden kann, einer Restflotation zugeführt werden, deren Konzentrat der Flotation zu dem Schritt (f) zurückgeführt werden kann. Weiterhin kann der Flotationsrückstand der Aufreinigungsflotation in einem vorteilhaften Ausführungsbeispiel direkt zu dem Schritt (f) zurückgeführt werden.

## Patentansprüche

1. Verfahren zur Rückgewinnung von Graphit aus schwarzer Masse, **gekennzeichnet durch** die folgenden Schritte in der folgenden Reihenfolge:
- Schritt (a): Bereitstellung einer schwarzen Masse, die Graphit enthält;
- Schritt (b): Zugeben von Wasser zu der schwarzen Masse und Herstellung einer Suspension der schwarzen Masse in Wasser;
- Schritt (c): Dosieren von Ozon als Oxidationsmittel zu der Suspension und gleichzeitig Rühren der Suspension von schwarzer Masse mit Wasser;
- Schritt (f): Flotation der Suspension und Abschöpfen von Graphit.

2. Verfahren nach Anspruch 1, **dadurch gekennzeichnet, dass**
- in Schritt (f) bei der Flotation der pH Wert in einem Bereich von 9 bis 10 ist.

3. Verfahren nach Anspruch 1 oder 2, **dadurch gekennzeichnet, dass**
- in Schritt (f) bei der Flotation 800 bis 5400g Kerosin pro t schwarze Masse und/oder 100 bis 1000 g MIBC(4-Methyl-2-pentanol) pro t schwarze Masse als Additive zugesetzt werden.

4. Verfahren nach einem der vorangehenden Ansprüche, **dadurch gekennzeichnet, dass**
- in einem Schritt (d) die Suspension aus Schritt (c) gefiltert und das Filtrat abgetrennt wird, wobei das Filtrat in Wasser gelöstes LiOH enthält, und der an Li verarmte Rückstand schwarze Masse mit Graphit enthält, wobei in einem Schritt (e) mit dem Rückstand aus Schritt (d) unter Zugabe von Wasser und/oder rezykliertem Filtrat aus Schritt (d), deren Li Anteil reduziert wurde, wieder eine Suspension von schwarzer Masse in Wasser, die Graphit enthält, hergestellt wird.

5. Verfahren nach einem der vorangehenden Ansprüche, **dadurch gekennzeichnet, dass** die Suspension
- nach Schritt (b) und vor Schritt (c), und/oder
- unter Rückbezug auf Anspruch 4 nach Schritt (e) und vor Schritt (f) in einem sauren Laugungsschritt (h) gelaugt wird, wobei mindestens eine Säure, vorzugsweise Schwefelsäure (H₂SO₄), und/oder rezirkulierte Säure zugegeben wird und der pH-Wert unter pH 3 gesenkt wird.

6. Verfahren nach Anspruch 5, **gekennzeichnet durch**
- Zugeben eines Reduktionsmittels, vorzugsweise Schwefeldioxid (SO₂), zu dem sauren Laugungsschritt (h).

7. Verfahren nach Anspruch 5 oder 6, **gekennzeichnet durch**
- Zugeben einer Calcium-Quelle, vorzugsweise Calciumhydroxid (Ca(OH)₂) und/oder Calciumoxid (CaO) und/oder Calciumcarbonat (CaCO₃), zu der Suspension aus Schritt (h).

8. Verfahren nach einem der vorangehenden Ansprüche, **dadurch gekennzeichnet, dass** in einem Schritt (i) die Suspension aus Schritt (h) filtriert wird.

9. Verfahren nach einem der vorangehenden Ansprüche, **dadurch gekennzeichnet, dass**
- in Schritt (c) die Suspension mit einer Scherrate von größer als 11000s⁻¹ in der Suspension gerührt wird.

10. Verfahren nach einem der vorangehenden Ansprüche, **dadurch gekennzeichnet, dass**
- in Schritt (c) die Suspension mit einer Scherrate von größer als 25000s⁻¹ in der Suspension gerührt wird.

11. Verfahren nach einem der vorangehenden Ansprüche, **dadurch gekennzeichnet, dass**
- Schritt (c) für mindestens 3 Stunden durchgeführt wird.

12. Verfahren nach einem der vorangehenden Ansprüche, **dadurch gekennzeichnet, dass**
- in Schritt (c) Ozon mit einer Rate von mindestens 0,1 Gramm (O₃)/Stunde/Gramm (schwarze Masse) und/oder mit einer maximalen Rate von 2 Gramm (O₃)/Stunde/Gramm (schwarze Masse) in die Suspension dosiert wird.

13. Verfahren nach einem der vorangehenden Ansprüche, **dadurch gekennzeichnet, dass**
- in Schritt (c) die Temperatur der Suspension über 69°C ist.

14. Verfahren nach einem der vorangehenden Ansprüche, **dadurch gekennzeichnet, dass**
- in Schritt (c) die Suspension der schwarzen Masse in Wasser einen pH-Wert im Bereich von 6 bis 8 aufweist.

15. Verfahren nach einem der Ansprüche 1 bis 13, **gekennzeichnet durch** den Schritt:
- Zugabe einer Säure zu der Suspension in Schritt (b) und/oder Schritt (c) und Absenken des pH-Wertes der Suspension auf einen pH-Wert im Bereich von 3 und bis 4,5, vorzugsweise 3 bis 4.

16. Verfahren nach Anspruch 15, **gekennzeichnet durch** den Schritt,
- nach Schritt (c) Zugabe einer Base; und
- Anheben des pH-Wertes der Suspension vor Schritt (d) oder Anheben des pH-Wertes des Filtrats von Schritt (d) auf einen pH-Wert von über 6.

17. Verfahren nach einem der vorangehenden Ansprüche, **dadurch gekennzeichnet, dass**
- das abgeschöpfte Flotationskonzentrat mit Graphit aus Schritt (f) in Wasser suspendiert wird, und eine Aufreinigungsflotation der Suspension und ein Abschöpfen von Graphit durchgeführt wird.

18. Verfahren nach einem der vorangehenden Ansprüche, **dadurch gekennzeichnet, dass**
- der Flotationsrückstand aus der Flotation aus Schritt (f) einer Restflotation zugeführt wird.

19. Verfahren nach Anspruch 17 oder 18 unter Rückbezug auf Anspruch 17, **dadurch gekennzeichnet, dass**
- das Flotationskonzentrat mit Graphit aus der Restflotation und/oder der Flotationsrückstand aus der Aufreinigungsflotation in den Schritt (f) zurückgeführt wird.

## Claims

1. Process for the recovery of graphite from black mass, **characterized by** the following steps in the following order:
- step (a): providing a black mass containing graphite;
- step (b): adding water to the black mass and creating a suspension of the black mass in water;
- step (c): dosing ozone as an oxidizing agent to the suspension and simultaneously stirring the suspension of black mass with water;
- step (f): flotation of the suspension and skimming off graphite.

2. Process according to claim 1, **characterized in that**
- in step (f) when flotation is carried out, the pH value is in the range of 9 to 10.

3. Process according to claim 1 or 2, **characterized in that**
- in step (f) when flotation is carried out, 800 to 5400 g of kerosene per t of black mass and/or 100 to 1000 g of MIBC (4-methyl-2-pentanol) per t of black mass are added as additives.

4. Process according to any one of the preceding claims,
**characterized in that**
- in a step (d) the suspension from step (c) is filtered and the filtrate is separated, wherein the filtrate contains LiOH dissolved in water and the residue depleted in Li contains black mass with graphite, wherein in a step (e) the residue from step (d) with the addition of water and/or recycled filtrate from step (d), the Li content of which has been reduced, is again processed to form a suspension of black mass in water, which contains graphite.

5. Process according to any one of the preceding claims,
**characterized in that** the suspension
- after step (b) and before step (c), and/or
- with reference to claim 4 after step (e) and before step (f) is leached in an acidic leaching step (h), wherein at least one acid, preferably sulfuric acid (H₂SO₄), and/or recirculated acid is added and the pH value is reduced to below pH 3.

6. Process according to claim 5, **characterized by**
- adding a reducing agent, preferably sulfur dioxide (SO₂), to the acidic leaching step (h).

7. Process according to claim 5 or 6, **characterized by**
- adding a calcium source, preferably calcium hydroxide (Ca(OH)₂) and/or calcium oxide (CaO) and/or calcium carbonate (CaCO₃), to the suspension from step (h).

8. Process according to any one of the preceding claims,
**characterized in that** in a step (i) the suspension from step (h) is filtered.

9. Process according to any one of the preceding claims,
**characterized in that**
- in step (c) the suspension is stirred with a shear rate of greater than 11,000 s⁻¹ in the suspension.

10. Process according to any one of the preceding claims,
**characterized in that**
- in step (c) the suspension is stirred at a shear rate of greater than 25,000 s⁻¹ in the suspension.

11. Process according to any one of the preceding claims,
**characterized in that**
- step (c) is carried out for at least 3 hours.

12. Process according to any one of the preceding claims,
**characterized in that**
- in step (c), ozone is dosed into the suspension at a rate of at least 0.1 gram (O₃)/hour/gram (black mass) and/or at a maximum rate of 2 grams (O₃)/hour/gram (black mass) .

13. Process according to any one of the preceding claims,
**characterized in that**
- in step (c), the temperature of the suspension is above 69°C.

14. Process according to any one of the preceding claims,
**characterized in that**
- in step (c), the suspension of the black mass in water comprises a pH value in the range from 6 to 8.

15. Process according to any one of claims 1 to 13, **characterized by** the step of:
- adding an acid to the suspension in step (b) and/or step (c) and lowering the pH value of the suspension to a pH value in the range of 3 to 4.5, preferably 3 to 4.

16. Process according to claim 15, **characterized by** the step of
- adding a caustic after step (c); and
- raising the pH value of the suspension before step (d) or raising the pH value of the filtrate from step (d) to a pH value higher than 6.

17. Process according to any preceding claim, **characterized in that**
- the skimmed flotation concentrate with graphite from step (f) is suspended in water and a purification flotation of the suspension and a skimming of graphite is carried out.

18. Process according to any one of the preceding claims,
**characterized in that**
- the flotation residue from the flotation in step (f) is fed to a residual flotation.

19. Process according to claim 17 or 18 with reference to claim 17, **characterized in that**
- the flotation concentrate with graphite from the residual flotation and/or the flotation residue from the purification flotation is recycled to step (f).

## Revendications

1. Procédé de récupération de graphite à partir d'une masse noire, **caractérisé par** les étapes suivantes dans l'ordre suivant :
- étape (a) : fourniture d'une masse noire contenant du graphite ;
- étape (b) : ajout d'eau à la masse noire et préparation d'une suspension de la masse noire dans l'eau ;
- étape (c) : dosage d'ozone comme oxydant à la suspension et agitation simultanée de la suspension de masse noire avec l'eau ;
- étape (f) : flottation de la suspension et écumage du graphite.

2. Procédé selon la revendication 1, **caractérisé en ce que**
- dans l'étape (f), lors de la flottation, le pH se situe dans une plage de 9 à 10.

3. Procédé selon la revendication 1 ou 2, **caractérisé en ce que**
- dans l'étape (f), lors de la flottation, 800 à 5400 g de kérosène par tonne de masse noire et/ou 100 à 1000 g de MIBC(4méthyl-2-pentanol) par tonne de masse noire sont ajoutés comme additifs.

4. Procédé selon l'une des revendications précédentes, **caractérisé en ce que**
- dans une étape (d), la suspension de l'étape (c) est filtrée et le filtrat est séparé, le filtrat contenant du LiOH dissous dans l'eau et le résidu appauvri en Li contenant de la masse noire avec du graphite, dans lequel, dans une étape (e), on prépare à nouveau avec le résidu de l'étape (d), en ajoutant de l'eau et/ou du filtrat recyclé de l'étape (d) dont la teneur en Li a été réduite, une suspension de masse noire dans l'eau qui contient du graphite.

5. Procédé selon l'une des revendications précédentes, **caractérisé en ce que** la suspension
- après l'étape (b) et avant l'étape (c), et/ou
- en référence à la revendication 4, après l'étape (e) et avant l'étape (f), est lixiviée dans une étape de lixiviation acide (h), dans lequel au moins un acide, de préférence de l'acide sulfurique (H₂SO₄), et/ou de l'acide recyclé est ajouté et le pH est abaissé en dessous de pH 3.

6. Procédé selon la revendication 5, **caractérisé par**
- l'ajout d'un agent réducteur, de préférence du dioxyde de soufre (SO₂), à l'étape de lixiviation acide (h).

7. Procédé selon la revendication 5 ou 6, **caractérisé par**
- l'ajout d'une source de calcium, de préférence de l'hydroxyde de calcium (Ca(OH)₂) et/ou de l'oxyde de calcium (CaO) et/ou du carbonate de calcium (CaCO₃), à la suspension de l'étape (h).

8. Procédé selon l'une des revendications précédentes, **caractérisé en ce que**, dans une étape (i), la suspension de l'étape (h) est filtrée.

9. Procédé selon l'une des revendications précédentes, **caractérisé en ce que**
- dans l'étape (c), la suspension est agitée à un taux de cisaillement supérieur à 11000 s⁻¹ dans la suspension.

10. Procédé selon l'une des revendications précédentes, **caractérisé en ce que**
- dans l'étape (c), la suspension est agitée à un taux de cisaillement supérieur à 25000 s⁻¹ dans la suspension.

11. Procédé selon l'une des revendications précédentes, **caractérisé en ce que**
- l'étape (c) est exécutée pendant au moins 3 heures.

12. Procédé selon l'une des revendications précédentes, **caractérisé en ce que**
- dans l'étape (c), l'ozone est dosé dans la suspension à un taux d'au moins 0,1 gramme (O₃)/heure/gramme (masse noire) et/ou à un taux maximal de 2 grammes (O₃)/heure/gramme (masse noire).

13. Procédé selon l'une des revendications précédentes, **caractérisé en ce que**
- dans l'étape (c), la température de la suspension est supérieure à 69 °C.

14. Procédé selon l'une des revendications précédentes, **caractérisé en ce que**
- dans l'étape (c), la suspension de la masse noire dans l'eau présente un pH dans la plage de 6 à 8.

15. Procédé selon l'une des revendications 1 à 13, **caractérisé par** l'étape :
- ajout d'un acide à la suspension dans l'étape (b) et/ou dans l'étape (c) et abaissement du pH de la suspension à un pH dans la plage de 3 à 4,5, de préférence de 3 à 4.

16. Procédé selon la revendication 15, **caractérisé par** l'étape :
- après l'étape (c), ajout d'une base ; et
- élévation du pH de la suspension avant l'étape (d) ou élévation du pH du filtrat de l'étape (d) à un pH supérieur à 6.

17. Procédé selon l'une des revendications précédentes, **caractérisé en ce que**
- le concentré de flottation écumé est mis en suspension dans l'eau avec le graphite de l'étape (f), et une flottation de purification de la suspension et un écumage du graphite sont effectués.

18. Procédé selon l'une des revendications précédentes, **caractérisé en ce que**
- le résidu de flottation issu de la flottation de l'étape (f) est amené à une flottation résiduelle.

19. Procédé selon la revendication 17 ou 18 en référence à la revendication 17, **caractérisé en ce que**
- le concentré de flottation contenant du graphite issu de la flottation résiduelle et/ou le résidu de flottation issu de la flottation de purification sont ramenés vers l'étape (f).
